# EUROPEAN PATENT SPECIFICATION

(11) **EP 1 075 616 B1**
(45) Date of publication and mention of the grant of the patent: **05.07.2006**
(21) Application number: 99924143.3
(22) Date of filing: 06.05.1999
(51) Int. Cl.: F16K 11/00, G05D 23/13

(54) **A SEQUENTIAL CARTRIDGE FOR A MIXING DEVICE, EXCHANGEABLE FOR A THERMOSTATIC CARTRIDGE**
SEQUENTIELLE KARTUSCHE FÜR EINE MISCHVORRICHTUNG, DIE MIT EINER THERMOSTATISCHEN KARTUSCHE AUSTAUSCHBAR IST
CARTOUCHE SEQUENTIELLE POUR DISPOSITIF MELANGEUR POUVANT ETRE REMPLACEE PAR UNE CARTOUCHE THERMOSTATIQUE

(30) Priority: 06.05.1998 IT TO980379
(43) Date of publication of application: 14.02.2001
(73) Proprietor: MASCO CORPORATION, Taylor, MI 48180 (US)
(72) Inventor: KNAPP, Alfons, D-88400 Biberach (DE)
(74) Representative: Oppermann, Mark
(86) International application number: PCT/US1999/009999
(87) International publication number: WO 1999/056522

(56) References cited:
- EP-A- 0 771 980
- DE-A- 19 622 368
- US-A- 4 121 761
- US-A- 5 344 067
- US-A- 5 356 074

## Description

### TECHNICAL FIELD

This invention relates to a sequential mixing cartridge for a cold and hot water mixing device, according to the preamble portion of claim 1. This invention further relates to an interchangeable sequential mixing cartridge and thermostatic mixing cartridge kit, as recited in claim 5.

### BACKGROUND OF THE INVENTION

Currently, various types of mixing valves are constructed to receive a mixing cartridge of the sequential type. A sequential type of cartridge has a valve designed to ensure in the progressive movement of an operating member in a certain field of adjustment, firstly, the delivery of cold water only, then a mixture with growing volumes of hot water, and finally the delivery of hot water only.

Thermostatic mixing valves are also known, which are constructed to receive a thermostatic mixing cartridge. The thermostatic cartridge is designed to regulate the mixing of cold water and hot water so as to ensure the delivery of mixed water having within a certain field of approximation a constant, possibly adjustable temperature.

Both of the thermostatic valves and sequential mixing valves have been linked in a pipeline for adjustment of flow to separate faucets. Alternatively both valves can be installed serially in a single faucet.

However, known mixing valves constructed to receive a sequential mixing cartridge cannot have the cartridge replaced with a thermostatic mixing cartridge, and mixing valves constructed to receive a thermostatic mixing cartridge cannot have the cartridge replaced with a sequential mixing cartridge. In the current state of the art, these two types of mixing cartridges have different constructions both in terms of external dimensions and placement of inlet openings for cold water and hot water and for delivery of mixed water so that they are incompatible with each other and cannot be interchanged.

This situation entails inconveniences. As a matter of fact, on the one hand, when it comes to actual manufacturing, it is necessary to provide units of different design and construction for a mixing valve housing intended to receive a sequential mixing cartridge and a mixing valve housing intended to receive a thermostatic mixing cartridge. The two different housing constructions result in an increase in their manufacturing and storage cost and, on the other hand, it is not possible to meet the requirement of a user to switch from a sequential mixing system to a thermostatic mixing system or vice versa without entirely replacing the mixing valve housing.

Document DE-A-196 22 368 forming the preamble portion of claim 1 discloses a plurality of sanitary mixer fittings, in particular of concealed mixer fittings, which form a set of mixer fittings that comprises identical universal connection housings with different cartridges and suitable different cartridges adapters. The universal housings have hot and cold water inlets for connection to the domestic water pipes as well as at least one mixed water outlet for connection e.g. to bath-tub inlets or showers. The relevant cartridge adapter is inserted into a location hole in the universal housings. The water inlets and outlets of the universal housings are flow-connected to water supply openings that are disposed in the inner surfaces of the adapter location hole in the universal housing. The water supply openings are flow-connected, in particular by annular chambers, to outer water supply openings in the outer surfaces of the relevant cartridge adapter. The relevant cartridge is inserted into a cartridge location hole in the relevant cartridge adapter. The water supply openings of the relevant cartridge are flow-connected to the inner water supply openings in the inner surface of the cartridge location hole of the relevant cartridge adapter. Finally, provided in the relevant cartridge adapter are channels that connect the cartridge-side inner water supply openings of the cartridge adapter to the universal housing-side outer water supply openings of the cartridge adapter.

As a result, this state of the art proposes a set of sanitary mixer fittings always having an identical and universal connection housing which, however, may receive differently shaped cartridges with any desired arrangement of water supply openings via an assigned cartridge adapter. This set of sanitary mixer fittings may therefore embrace all types of mixer fitting such as, for example, single-lever or multi-lever mixers, thermostatic mixers, etc. A conversion from one specific type of cartridge to another specific type of cartridge, however, still requires replacement of one specific cartridge adapter by another specific cartridge adapter, which also add to the overall dimensions of the respective fitting.

### SUMMARY OF THE INVENTION

The object of the present invention is to provide a sequential mixing cartridge for a cold and hot water mixing device which can be interchanged easily with a thermostatic mixing cartridge, and an interchangeable sequential mixing cartridge and thermostatic mixing cartridge kit including such sequential mixing cartridge at low cost.

This object is solved by the features indicated in claims 1 and 5, respectively. Advantageously developed embodiments of the invention are subject-matter of the dependent claims 2 to 4 and 6, respectively.

According to the present invention, in a sequential mixing cartridge for a cold and hot water mixing device, comprising an outer body with inlet openings for cold water and hot water and with a delivery opening for mixed water and housing a sequential mixing mechanism and an operating member partially protruding from the outer body; the shape and outside dimensions of the outer body as well as the arrangement of the inlet openings and the delivery opening substantially match the pertinent features of a thermostatic mixing cartridge, wherein the inlet openings are arranged on an outer surface of the outer body, whereas the delivery opening is arranged at an axial end of the outer body, axially opposite to the operating member, and wherein the sequential mixing mechanism comprises a slide valve that is axially mobile due to the action of the operating member and that cooperates directly or indirectly with the inlet openings in a manner similar to what happens in a thermostatic mixing cartridge.

Further, the interchangeable sequential mixing cartridge and thermostatic mixing cartridge kit according to the present invention comprises: a common outer body including a common lower part and a common cap member, the outer body having inlet openings for cold water and hot water about a side wall of the outer body and a delivery opening for mixed water at an axial end; a common slide valve slideably mounted in the interior of the lower part; a common lower spring biasing the slide valve toward the cap member; a common operating member operably mountable through the cap member and operably connected to the slide valve; a control member to be selectively interposed between the operating member and the slide valve; and a thermostatic assembly to be selectively interposed between the operating member and the slide valve.

Thus, a cartridge is constructed to selectively accommodate the function of a thermostatic mixing cartridge or the function of a sequential mixing cartridge. As a result, one mixing valve housing will be able without modification and/or different cartridge adapters to receive a selected one of a sequential mixing cartridge and a thermostatic mixing cartridge. As such a mixing device for thermostatic control can be easily connected to a sequential mixing device and vice versa. The replacement of one cartridge with the other is easy, thus providing the possibility of meeting any sudden requirement of a user simply by replacement of the mixing cartridge inserted in the body of the mixing valve housing. In other words, the sequential mixing cartridge according to the invention can be mounted in a mixing valve housing constructed to receive the thermostatic mixing cartridge, and reciprocally, the thermostatic mixing cartridge can be mounted in a mixing valve housing constructed to receive a sequential mixing cartridge according to the invention.

Preferably, furthermore, the sequential mixing mechanism is also constructed to provide a delivery intercept or shut-off position and a regulating field for the delivered water volume. The cartridge may comprise a control member for the slide valve that extends up to a point in proximity to the delivery opening and cooperates with it in order partially or completely to close it thereby providing a water flow volume and shut-off function. In this way, the cartridge for the sequential mixing according to the invention can confer upon the mixing device in which is mounted also the shut-off feature of a mixing faucet. One can expand the design and storage combination allowed by the cartridge, according to the invention, also permitting a standardization between mixing devices that have or do not have the shut-off character of a mixing faucet.

Finally, the slide valve can advantageously be operated by the operating member which is screwed into the outer body of the cartridge and intended to be operated in a rotating manner.

### BRIEF DESCRIPTION OF THE DRAWINGS

Reference now is made to the accompanying drawings, in which:
Figure 1 illustrates an embodiment of the sequential mixing valve housing and sequential mixing cartridge according to the invention in an axial profile;
Figure 2 analogously illustrates an embodiment of the thermostatic mixing cartridge and housing within which the cartridge according to Figure 1 is interchangeable.

### DETAILED DESCRIPTION OF THE PREFERRED EMBODIMENT

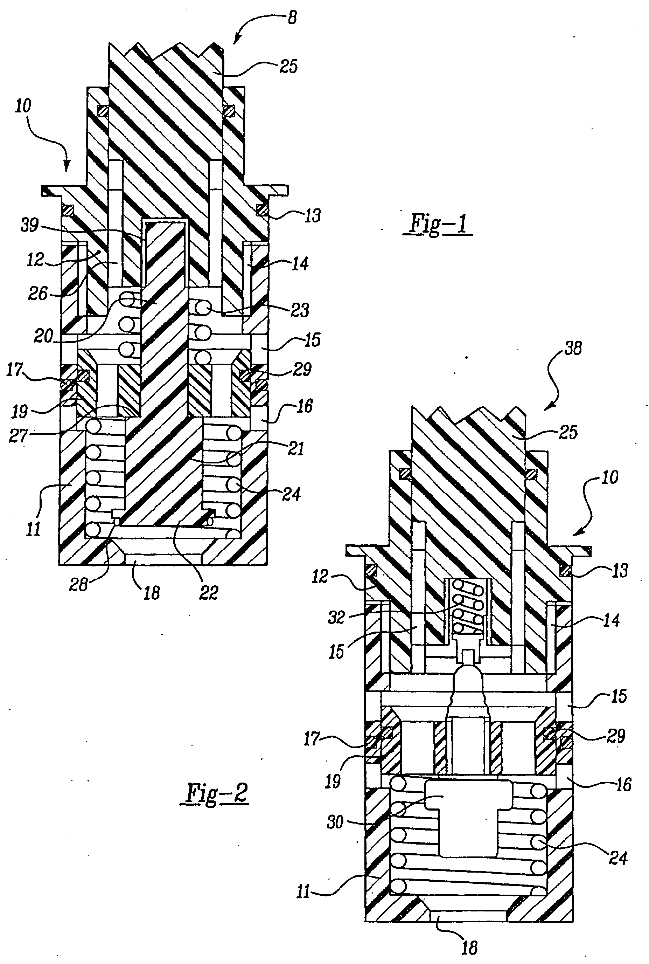

Referring now to Figure 1, a sequential mixing cartridge 8 according to the invention comprises an outer housing 10 made up of two parts, a lower part or body 11 and an upper part or cap 12. The upper part 12 acts as a cap for the body 11 and is provided with a ring-shaped packing washer 13 to provide a hold in the body of a mixing device (not shown) in which the cartridge is intended to be introduced. In the form shown, the two parts 11 and 12 of the outer housing are reciprocally linked by means of a threaded coupling 14, but they can also be linked in any other way so that they can or cannot be disassembled. The lower body 11 has axially spaced openings 15 and 16 for the entry of respective cold and hot water. The openings 15 and 16 are separated by a ring-shaped exterior packing 17. Other packings can be provided but are not shown. As an alternative, the packing can be carried by the body of the mixing device that is intended to receive the cartridge 10. At its inside end, lower body 11 of the cartridge housing 10 has a delivery opening 18 for mixed water.

Comparing Figure 1, which shows a sequential mixing cartridge 8 according to the invention, with Figure 2, which shows a thermostatic mixing cartridge 38 according to standard technique, one can easily find that the shapes and outside dimensions of housing 10 and the placement of inlet openings 15 and 16 and delivery opening 18 of the sequential mixing cartridge 8 according to the invention are identical to the corresponding shapes and arrangements of the corresponding parts 11 and 12 of corresponding housing 10 of a thermostatic mixing cartridge 38. These parts are labeled with the same numerical references. It is therefore clear that the sequential mixing cartridge 8 according to Figure 1 is entirely interchangeable with the thermostatic mixing cartridge 38 according to Figure 2.

Inlet openings 15 and 16 for cold water and hot water of the sequential mixing cartridge 8 are controlled by a slide valve 19 that is axially mobile and identical to the corresponding slide valve 19 of the thermostatic mixing cartridge in Figure 2. Slide valve 19 in Figure 1 is axially slideable to and operated by a control member 20 that has a lower part 21 forming an abutment shoulder 27 against which slide valve 19 is pushed by a spring 23. A spring 24, weaker than spring 23, biases slide valve 19 upward. We can then see that normally the slide valve 29 follows the axial shifting of control member 20. It is shown in an intermediate position, but one can understand that starting from its lowest position in which it fully opens the inlet openings 15 for cold water and completely closes the inlet openings 16 for hot water and shifting upward (according to the figure) due to both the biasing action of spring 24 and the lifting by shoulder 27, slide valve 19 progressively uncovers inlet openings 16 for hot water and progressively blocks inlet openings 15 for cold water, thus leading to the delivery of mixed water at a progressively rising temperature up to the point where it completely closes inlet openings 15 for cold water and fully opens openings 16 and hence gives rise to the delivery of hot water only. A sealing gasket 29 installed on the slide valve 19 prevents cross flow leakage.

Control member 20 may have a threaded connection 39 with an operating member or stem 25 that allows control member 20 to move with operating member 25. Operating member 25, in the manner shown, is in turn coupled to the upper part 12 of the envelope of the cartridge by means of a working threading 26 so that when it is manually rotated, it axially moves up and down to axially move the control member 20 and slide valve 19 up and down. The operating member 25 is connectable to a handle (not shown).

In the embodiment shown, lower part 21 of control member 20 extends to a point in proximity to delivery opening 18. Its distal end is a head 22 provided with sealing gasket 28 that can be seated at opening 18. Control member 20, therefore, is able partially or totally to block delivery opening 18, thus acting as a faucet for adjusting the flow rate and for intercept or complete shut-off of water flow. The approach of head 22 of control member 20 to delivery opening 18 in order partially or totally to block it is made possible by the fact that slide valve 19 is slideably mounted on lower part 21 and biased by spring 23. When the slide valve 19 reaches the end of its run downward to block off ports 16, control member 20 can move further down separating shoulder 27 from slide valve 19 and leaving slide valve 19 motionless whilst compressing spring 23.

However, this function of adjusting the flow volume and the shut-off function are not always required. When it is not necessary to provide flow volume control shut-off, lower part 21 of control member 20 can end just below slide valve 19 and shoulder 27 so that there will be no head 22 and no sealing packing 28. In this case, other simplifications can also be introduced in the structure.

As shown by a comparison of Figures 1 and 2, different internal components of the sequential mixing cartridge 8 and the thermostatic mixing cartridge 38 can also be standardized (common to both cartridges) thus reducing manufacturing costs. The slide valve 19, slide seal 29, operating member 25, and lower spring 24 are all common interior components. The characteristic components namely the thermostatic element 30 and the safety spring 32 of the thermostatic mixing cartridge 38 in Figure 2 are not further described because they have conventional structure and function and because they are not related to this invention.

It must be understood, of course, that the invention is not confined to the embodiment described and illustrated as example. Some possible modifications have been described and others are within reach of the expert in the field; in particular, the shapes and outside dimensions of the envelope of the sequential mixing cartridge and the arrangement of the inlet and delivery openings must be modified when one wishes to make the sequential mixing cartridge interchangeable with various models of thermostatic mixing cartridges.

These and other modifications and any substitution with technical equivalents can be introduced in what is described and illustrated here without deviating from the scope of the invention and the coverage of this patent as defined by the appended claims.

## Claims

1. A sequential mixing cartridge (8) for a cold and hot water mixing device, comprising an outer body (10) with inlet openings (15, 16) for cold water and hot water and with a delivery opening (18) for mixed water and housing a sequential mixing mechanism and an operating member (25) partially protruding from said outer body (10), **characterized in that** the shape and outside dimensions of said outer body (10) as well as the arrangement of said inlet openings (15, 16) and said delivery opening (18) substantially match the pertinent features of a thermostatic mixing cartridge (38), wherein said inlet openings (15, 16) are arranged on an outer surface of said outer body (10), whereas said delivery opening (18) is arranged at an axial end of said outer body (10), axially opposite to said operating member (25), and wherein said sequential mixing mechanism comprises a slide valve (19) that is axially mobile due to the action of said operating member (25) and that cooperates directly or indirectly with said inlet openings (15, 16) in a manner similar to what happens in a thermostatic mixing cartridge (38).

2. A sequential mixing cartridge (8) according to claim 1, further **characterized by** a delivery shut-off member (22, 28) for an adjustment of the delivered flow rate.

3. A sequential mixing cartridge (8) according to claim 1, further **characterized by** a control member (20) connected to said slide valve (19), said control member (20) extending to a point in proximity to said delivery opening (18) and cooperating with it in order partially or completely to block it and hence to control the flow rate through said cartridge (8).

4. A sequential mixing cartridge (8) according to claim 1, **characterized in that** said slide valve (19) is operated by said operating member (25) which is screwed into said outer body (10) and intended to be operated in a rotary fashion.

5. An interchangeable sequential mixing cartridge (8) and thermostatic mixing cartridge (38) kit **characterized by**:
a common outer body (10) including a common lower part (11) and a common cap member (12), said outer body (10) having inlet openings (15, 16) for cold water and hot water about a side wall of said outer body (10) and a delivery opening (18) for mixed water at an axial end;
a common slide valve (19) slideably mounted in the interior of said lower part (11);
a common lower spring (24) biasing said slide valve (19) toward said cap member (12);
a common operating member (25) operably mountable through said cap member (12) and operably connected to said slide valve (19);
a control member (20) to be selectively interposed between said operating member (25) and said slide valve (19); and
a thermostatic assembly (30, 32) to be selectively interposed between said operating member (25) and said slide valve (19).

6. An interchangeable sequential mixing cartridge (8) and thermostatic mixing cartridge (38) kit according to claim 5, **characterized in that** said control member (20) is connected to said slide valve (19), extends to a point in proximity to said delivery opening (18) and cooperates with it in order partially or completely to block it and hence to control the flow rate through said cartridge (8).

## Patentansprüche

1. Sequentielle Mischkartusche (8) für eine Kalt- und Warmwassermischvorrichtung, umfassend einen Außenkörper (10) mit Einlaßöffnungen (15, 16) für kaltes Wasser und warmes Wasser und mit einer Auslaßöffnung (18) für Mischwasser und einen sequentiellen Mischmechanismus und ein Betätigungsglied (25), das teilweise aus dem Außenkörper (10) vorsteht, einschließend, **dadurch gekennzeichnet, daß** die Form und die Außenabmessungen des Außenkörpers (10) wie auch die Anordnung der Einlaßöffnungen (15, 16) und der Auslaßöffnung (18) im wesentlichen den passenden Merkmalen einer thermostatischen Mischkartusche (38) entsprechen, worin die Einlaßöffnungen (15, 16) an einer Außenfläche des Außenkörpers (10) angeordnet sind, während die Auslaßöffnung (18) an einem axialen Ende des Außenkörpers (10) dem Betätigungsglied (25) axial entgegengesetzt angeordnet ist, und worin der sequentielle Mischmechanismus ein Schieberventil (19) umfaßt, das veranlaßt durch die Einwirkung des Betätigungsglieds (25) axial bewegbar ist und das direkt oder indirekt mit den Einlaßöffnungen (15, 16) auf eine den Vorgängen in einer thermostatischen Mischkartusche (38) ähnliche Weise zusammenarbeitet.

2. Sequentielle Mischkartusche (8) nach Anspruch 1, weiterhin **gekennzeichnet durch** ein Auslaßabsperrglied (22, 28) für eine Einstellung der austretenden Durchflußmenge.

3. Sequentielle Mischkartusche (8) nach Anspruch 1, weiterhin **gekennzeichnet durch** ein Steuerorgan (20), das an das Schieberventil (19) angeschlossen ist, wobei sich das Steuerorgan (20) bis zu einem Punkt in der Nähe der Auslaßöffnung (18) erstreckt und mit ihr zusammenarbeitet, um sie teilweise oder vollständig abzusperren und **dadurch** die Durchflußmenge **durch** die Kartusche (8) zu steuern.

4. Sequentielle Mischkartusche (8) nach Anspruch 1, **dadurch gekennzeichnet, daß** das Schieberventil (19) durch das Betätigungsglied (25) betätigt wird, welches in den Außenkörper (10) eingeschraubt und zur Betätigung in einer Drehbewegung vorgesehen ist.

5. Bausatz bestehend aus einer austauschbaren sequentiellen Mischkartusche (8) und einer thermostatischen Mischkartusche (38) **gekennzeichnet durch**:
einen gemeinsamen Außenkörper (10), der einen gemeinsamen unteren Teil (11) und ein gemeinsames Kappenglied (12) einschließt, wobei der untere Teil (10) Öffnungen (15, 16) für kaltes Wasser und warmes Wasser in einer Seitenwand des Außenkörpers (10) und eine Auslaßöffnung (18) für Mischwasser an einem axialen Ende aufweist;
ein gemeinsames Schieberventil (19), das verschiebbar im Inneren des unteren Teils (11) angebracht ist;
eine gemeinsame untere Feder (24), die das Schieberventil (19) gegen das Kappenglied (12) vorspannt;
ein gemeinsames Betätigungsglied (25), das bedienbar **durch** das Kappenglied (12) montierbar und bedienbar an das Schieberventil (19) angeschlossen ist;
ein Steuerorgan (20), das dazu bestimmt ist selektiv zwischen das Betätigungsglied (25) und das Schieberventil (19) eingesetzt zu werden; und
eine thermostatische Baugruppe (30, 32) die dazu bestimmt ist, selektiv zwischen das Betätigungsglied (25) und das Schieberventil (19) eingesetzt zu werden.

6. Bausatz bestehend aus einer austauschbaren sequentiellen Mischkartusche (8) und einer thermostatischen Mischkartusche (38) nach Anspruch 5, **dadurch gekennzeichnet, daß** das Steuerorgan (20) an das Schieberventil (19) angeschlossen ist, sich bis zu einem Punkt in der Nähe der Auslaßöffnung (18) erstreckt und mit ihr zusammenarbeitet, um sie teilweise oder vollständig abzusperren und dadurch die Durchflußmenge durch die Kartusche (8) zu steuern.

## Revendications

1. Cartouche de mélange séquentielle (8) pour un dispositif de mélange d'eau froide et chaude, comprenant un corps extérieur (10) avec des ouvertures d'entrée (15, 16) pour l'eau froide et l'eau chaude et avec une ouverture de sortie (18) pour l'eau mélangée et abritant un mécanisme de mélange séquentiel et un élément d'actionnement (25) faisant partiellement saillie depuis ledit corps extérieur (10), **caractérisée en ce que** la forme et les dimensions extérieures dudit corps extérieur (10) ainsi que l'agencement desdites ouvertures d'entrée (15, 16) et de ladite ouverture de sortie (18) correspondent sensiblement aux caractéristiques pertinentes d'une cartouche de mélange thermostatique (38), dans laquelle lesdites ouvertures d'entrée (15, 16) sont agencées sur une surface extérieure dudit corps extérieur (10), tandis que ladite ouverture de sortie (18) est agencée à une extrémité axiale dudit corps extérieur (10), axialement opposé audit élément d'actionnement (25), et dans laquelle ledit mécanisme de mélange séquentiel comprend une vanne à tiroir (19) qui est axialement mobile grâce à l'action dudit élément d'actionnement (25) et qui coopère directement ou indirectement avec lesdites ouvertures d'entrée (15, 16) d'une manière similaire à ce qui se produit dans une cartouche de mélange thermostatique (38).

2. Cartouche de mélange séquentielle (8) selon la revendication 1, **caractérisée en outre par** un élément de fermeture de sortie (22, 28) destiné à l'ajustement du débit du flux délivré.

3. Cartouche de mélange séquentielle (8) selon la revendication 1, **caractérisée en outre par** un élément de commande (20) connecté à ladite vanne à tiroir (19), ledit élément de commande (20) s'étendant jusqu'à un point à proximité de ladite ouverture de sortie (18) et coopérant avec cette dernière afin de la bloquer partiellement ou complètement et de contrôler ainsi le débit à travers ladite cartouche (8).

4. Cartouche de mélange séquentielle (8) selon la revendication 1, **caractérisée en ce que** ladite vanne à tiroir (19) est actionnée par ledit élément d'actionnement (25) qui est vissé dans ledit corps extérieur (10) et prévu pour être actionné de manière rotative.

5. Kit de cartouche de mélange séquentielle échangeable (8) et de cartouche de mélange thermostatique (38) **caractérisé par** :
un corps extérieur (10) commun comprenant une partie inférieure (11) commune et un élément de capuchon (12) commun, ledit corps extérieur (10) ayant des ouvertures d'entrée (15, 16) pour l'eau froide et l'eau chaude autour d'une paroi latérale dudit corps extérieur (10) et une ouverture de sortie (18) pour l'eau mélangée à une extrémité axiale ;
une vanne à tiroir (19) commune montée de manière à pouvoir coulisser à l'intérieur de ladite partie inférieure (11) ;
un ressort inférieur (24) commun inclinant ladite vanne à tiroir (19) vers ledit élément de capuchon (12) ;
un élément d'actionnement (25) commun pouvant être monté de manière opérationnelle à travers ledit élément de capuchon (12) et actionné de manière opérationnelle à ladite vanne à tiroir (19) ;
un élément de commande (20) destiné à être interposé de manière sélective entre ledit élément d'actionnement (25) et ladite vanne à tiroir (19) ; et
un ensemble thermostatique (30, 32) destiné à être interposé de manière sélective entre ledit élément d'actionnement (25) et ladite vanne à tiroir (19).

6. Kit de cartouche de mélange séquentielle échangeable (8) et de cartouche de mélange thermostatique (38) selon la revendication 5, **caractérisé en ce que** ledit élément de commande (20) est connecté à ladite vanne à tiroir (19), s'étend jusqu'à un point à proximité de ladite ouverture de sortie (18) et coopère avec cette dernière afin de la bloquer partiellement ou complètement et de contrôler ainsi le débit à travers ladite cartouche (8).
